# FASCICULE DE BREVET EUROPEEN

(11) **EP 4 081 577 B1**
(45) Date de publication et mention de la délivrance du brevet: **29.05.2024**
(21) Numéro de dépôt: 20845412.4
(22) Date de dépôt: 14.12.2020
(51) Int. Cl.: C08J 3/24, C08K 5/51, C08C 19/22, C08F 136/08, C08F 236/10

(54) **MELANGE MAITRE A BASE D'UN POLYMERE MODIFIE ET D'UN ADDITIF ORGANOPHOSPHORE ET SON PROCEDE DE FABRICATION**
MASTERBATCH AUF BASIS EINES MODIFIZIERTEN POLYMERS UND EINES ORGANOPHOSPHOR-ADDITIVS UND VERFAHREN ZUM HERSTELLEN DESSELBEN
MASTERBATCH BASED ON A MODIFIED POLYMER AND AN ORGANOPHOSPHORUS ADDITIVE, AND METHOD FOR MANUFACTURING SAME

(30) Priorité: 24.12.2019 FR 1915578
(43) Date de publication de la demande: 02.11.2022
(73) Titulaire: COMPAGNIE GENERALE DES ETABLISSEMENTS MICHELIN, 63000 Clermont-Ferrand (FR)
(72) Inventeur: JEAN-BAPTISTE-DIT-DOMINIQUE, François, 63040 CLERMONT-FERRAND CEDEX 9 (FR); COSTE, Nathalie, 63040 CLERMONT-FERRAND CEDEX 9 (FR); JASSELIN, Adeline, 63040 CLERMONT-FERRAND CEDEX 9 (FR)
(74) Mandataire: M.F.P. Michelin
(86) Numéro de dépôt international: PCT/FR2020/052418
(87) Numéro de publication internationale: WO 2021/130429

(56) Documents cités:
- FR-A1- 3 038 607
- FR-A1- 3 060 571

## Description

### 1-DOMAINE DE L'INVENTION

Le domaine de l'invention est celui des mélanges-maîtres à base d'un polymère, de leurs procédés de fabrication et de leurs utilisations dans des compositions, en particulier dans des compositions de caoutchouc destinées notamment à la fabrication de bandages pneumatiques ou non pneumatiques.

### 2-ARRIERE PLAN TECHNIQUE

La modification de la structure chimique d'un polymère impacte généralement ses propriétés chimiques et physiques ainsi que les propriétés des compositions le contenant. Cette modification de structure peut notamment être réalisée par l'introduction de fonctions chimiques à l'aide d'un agent de greffage. Les fonctions introduites peuvent, par exemple, améliorer la dispersion d'une charge renforçante dans la matrice élastomérique et permettent ainsi l'obtention d'un matériau davantage homogène.

A titre d'agent de greffage de polymères, on peut citer par exemple l'utilisation de composés 1,3-dipolaires porteurs d'un dipôle oxyde de nitrile. La modification d'un polymère par ce type de composés est connue et a lieu par une réaction de cycloaddition [3+2] de l'agent de greffage 1,3-dipolaire sur une insaturation carbone-carbone des monomères du polymère. Très souvent, cet agent de greffage est un composé possédant une autre fonction chimique différente de celle du dipôle oxyde de nitrile, ladite autre fonction conférant de nouvelles propriétés au polymère. Ces agents de greffage 1,3-dipolaires permettent ainsi de greffer les fonctions chimiques pendantes sur le polymère et permettent d'obtenir un polymère modifié ou fonctionnalisé.

Les documents WO2015177105, US20120046418, WO2019102128 décrivent une réaction de modification d'un élastomère diénique par un agent de greffage 1,3-dipolaire par voie massique dans un mélangeur interne. Plus précisément, l'élastomère diénique et l'agent de greffage 1,3-dipolaire sont introduits dans un mélangeur interne dans lequel s'effectue un malaxage thermomécanique, puis le mélange obtenu subit une étape de traitement thermique à 120°C pendant quelques minutes, afin d'obtenir un bon rendement de greffage dudit agent de greffage 1,3-dipolaire sur ledit élastomère diénique. Cependant, cette étape de traitement thermique génère un surcoût dans un procédé industriel lié à cette étape additionnelle. FR3060571 divulgue également un procédé de préparation d'un élastomère diénique modifié par un composé 1,3-dipolaire.

Par ailleurs, lorsque l'élastomère diénique est un caoutchouc naturel, le rendement de greffage de l'agent de greffage 1,3-dipolaire est, avec le procédé décrit ci-dessus, inférieur à celui obtenu pour les élastomères synthétiques. Pour pallier ce problème, le document WO2017121950 divulgue l'utilisation du caoutchouc naturel époxydé ou la réalisation d'une étape d'époxydation du caoutchouc naturel avant que ne soit effectué la réaction de greffage de l'agent de greffage 1,3 dipolaire. Cette étape d'époxydation du caoutchouc naturel génère également un surcoût dans un procédé industriel.

Il existe donc un besoin d'améliorer le procédé de modification d'un polymère par greffage d'un agent de greffage 1,3-dipolaire.

Il existe également un besoin de disposer d'un procédé de modification d'un polymère par un agent de greffage 1,3-dipolaire qui soit simple à mettre en oeuvre, c'est-à-dire nécessitant un nombre limité d'étape réactionnelle, et présentant un rendement de greffage équivalent voir amélioré par rapport aux procédés de l'art antérieur.

En outre, il existe aussi un besoin de disposer d'un procédé de modification d'un polymère par un agent de greffage 1,3-dipolaire qui permette d'obtenir des rendements de greffage améliorés, quelle que soit la nature chimique du polymère utilisé comme réactif de départ.

Le but de la présente invention est de répondre au moins en partie aux besoins précités.

### 3-RESUME DE L'INVENTION

Le déposant a mis au point un nouveau procédé de préparation d'un polymère par un agent de greffage 1,3-dipolaire plus simple à mettre en oeuvre que les procédés de l'art antérieur et qui permet d'obtenir des rendements de greffage significativement améliorés par rapport au procédé de l'art antérieur ; quelle que soit la nature du polymère, en particulier d'un élastomère diénique.

De manière surprenante, le déposant a découvert que lorsqu'un additif organophosphoré spécifique est utilisé dans un procédé de greffage d'un agent de greffage 1,3-dipolaire sur un polymère, le greffage de ce composé peut notamment s'effectuer sans l'étape de traitement thermique et sans que le rendement de la réaction en soit affecté, voir même en améliorant significativement le rendement de greffage, et ce quelle que soit la nature chimique du polymère, en particulier de l'élastomère diénique, notamment lorsqu'il s'agit du caoutchouc naturel ou d'un polyisoprène de synthèse.

Ainsi, l'invention a pour objet au moins un procédé de fabrication d'un mélange maître comprenant les étapes suivantes :
(a) mettre en contact au moins un polymère initial comportant au moins une insaturation carbone-carbone avec au moins un agent de greffage 1,3-dipolaire porteur d'au moins un dipôle oxyde de nitrile en présence d'un au moins un additif organophosphoré choisi dans le groupe constitué par les triesters d'acide phosphorique, les phosphonates, les phosphinates, les oxydes de phosphines et les mélanges de ces composés,
(b) récupérer le mélange maître obtenu à l'étape précédente.

Plus particulièrement, le procédé de fabrication d'un mélange maître selon l'invention peut présenter avantageusement au moins l'une des caractéristiques préférées suivantes prises seules ou en combinaisons.

Préférentiellement, l'additif organophosphoré est mis en contact avec le polymère initial préalablement à leur mise en contact avec l'agent de greffage 1,3 dipolaire.

Préférentiellement, l'additif organophosphoré est mis en contact avec l'agent de greffage 1,3 dipolaire préalablement à leur mise en contact avec le polymère initial.

Préférentiellement, le polymère initial, l'agent de greffage 1,3-dipolaire et l'additif organophosphoré sont mis en contact simultanément.

Préférentiellement, l'étape de mise en contact (a) s'effectue en masse ou en solution.

Préférentiellement, les étapes (a) et (b) s'effectuent à une température inférieure ou égale à 35°C.

Préférentiellement, le procédé comprend en outre au moins une étape de traitement thermique (a'), postérieure à l'étape mise en contact (a).

Préférentiellement, l'étape de traitement thermique (a') s'effectue à une température supérieure à 35°C, de préférence à une température supérieure ou égale à 36°C, plus préférentiellement encore à une température comprise dans un domaine allant de 36°C à 180°C, plus préférentiellement allant de 36°C à 150°C.

Préférentiellement, l'additif organophosphoré est choisi dans le groupe formé par les triesters d'acide phosphorique, les phosphonates, les phosphinates et les mélanges de ces composés.

Préférentiellement, l'additif organophosphoré est choisi dans le groupe formé par les triesters d'acide phosphorique, les phosphonates et les mélanges de ces composés.

Préférentiellement, l'additif organophosphoré est choisi dans le groupe formé par les triesters d'acide phosphorique et les mélanges de ces composés.
Préférentiellement, l'additif organophosphoré répond à la formule (I) 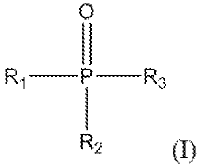 dans laquelle :
- R1 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20 ;
- R2 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20; et
- R3 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20.

Préférentiellement, l'additif organophosphoré répond à la formule (I) dans laquelle :
- R1 est choisi dans le groupe constitué par les alkyles en C1-C20, les aryles en C6-C20 et les groupes O-Ra avec Ra un radical choisi dans le groupe constitué par les alkyles en C1-C20 et les aryles en C6-C20;
- R2 est choisi dans le groupe constitué par les alkyles en C1-C20, les aryles en C6-C20, et les groupes O-Ra avec Ra un radical choisi dans le groupe constitué par les alkyles en C1-C20 et les aryles en C6-C20; et
- R3 est choisi dans le groupe constitué par les alkyles en C1-C20, les aryles en C6-C20 et les groupes O-Ra avec Ra un radical choisi dans le groupe constitué par les alkyles en C1-C20 et les aryles en C6-C20.

Préférentiellement, l'additif organophosphoré répond à la formule (Ia) : 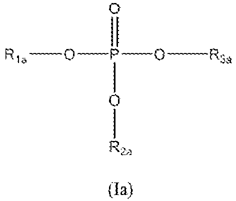 dans laquelle R1a, R2a, R3a, identiques ou différents, sont choisis dans le groupe constitué par les alkyles en C1-C20, les aryles en C6-C20, les alkyl(C1-C20)aryles en C6-C20 et les aryl(C6-C20)alkyles en C1-C20.

Préférentiellement, dans la formule (Ia), R1a, R2a, R3a, identiques ou différents, sont choisis dans le groupe constitué par les alkyles en C1-C12, les aryles en C6-C12, les alkyl(C1-C 12)aryles en C6-C12 et les aryl(C6-C12)alkyles en C1-C12.

Préférentiellement, dans la formule (Ia) R1a, R2a, R3a, identiques ou différents, sont choisis dans le groupe constitué par les alkyles en C1-C12 et les aryles en C6-C12.

Préférentiellement, l'additif organophosphoré est choisi dans le groupe constitué par le tri(éthylhéxyl)phosphate, le 2-éthylhexyldiphénylphosphate, le tri-n-octylphosphate, le triisobutylphosphate et leurs mélanges.

Préférentiellement, le polymère initial est un élastomère comportant au moins une insaturation carbone-carbone.

Préférentiellement, le polymère initial est un élastomère diénique.

Préférentiellement, le polymère initial est choisi dans le groupe constitué par le caoutchouc naturel, les polyisoprènes de synthèse, les polybutadiènes, les copolymères d'isoprène, les copolymères de butadiène et les mélanges de ces polymères.

Préférentiellement, le polymère initial est choisi dans le groupe constitué par le caoutchouc naturel, les polyisoprènes de synthèse, les copolymères d'isoprène et les mélanges de ces polymères.

Préférentiellement, le taux molaire dudit agent de greffage 1,3-dipolaire est compris dans un domaine allant de 0,01 % à 10 % mol, de préférence de 0,01 % à 5 % mol.

Préférentiellement, l'additif organophosphoré est utilisé à un taux supérieur ou égal à 0,3 pcp, plus préférentiellement supérieur ou égal à 0,4 pcp, encore plus préférentiellement supérieur ou égal à 0,5 pcp.

Préférentiellement, l'additif organophosphoré est utilisé à un taux compris dans un domaine allant de 0,3 pcp à 20 pcp, de préférence compris dans un domaine allant de 0,4 pcp à 10 pcp.

Préférentiellement, l'agent de greffage 1,3 dipolaire comprend outre le dipôle oxyde de nitrile, au moins une fonction chimique choisie dans le groupe constitué par les hétérocycles azotés ou soufré éventuellement substitués, les esters, les oxiranes, les carbonates, et les amines tertiaires.

Préférentiellement, l'agent de greffage 1,3 dipolaire comprend outre le dipôle oxyde de nitrile, au moins une fonction chimique choisie dans le groupe constitué par les hétérocycles azotés éventuellement substitués, tels les imidazoles ou benzoimidazoles substitués ou non substitués, les oxiranes et les carbonates.

Un autre objet de la présente divulgation (non revendiqué) concerne un mélange maître susceptible être obtenu par le procédé défini ci-dessus.

Un autre objet de la présente invention concerne un mélange maître à base d'au moins un additif organophosphoré, d'au moins un polymère initial comportant au moins une insaturation carbone-carbone et au moins un agent de greffage 1,3-dipolaire porteur d'au moins un dipôle oxyde de nitrile, ledit additif organophosphoré étant choisi dans le groupe constitué par les triesters d'acide phosphorique, les phosphonates, les phosphinates, les oxydes de phosphines et les mélanges de ces composés.

Un autre objet de la présente divulgation (non revendiqué) concerne un mélange maître comprenant au moins un additif organophosphoré et au moins un polymère modifié, en présence dudit additif organophosphoré, par au moins un agent de greffage 1,3-dipolaire porteur d'au moins un dipôle oxyde de nitrile, ledit additif organophosphoré étant choisi dans le groupe constitué par les triesters d'acide phosphorique, les phosphonates, les phosphinates, les oxydes de phosphines et les mélanges de ces composés.

Plus particulièrement, le mélange maître de l'invention peut présenter avantageusement au moins l'une des caractéristiques préférées suivantes prises seules ou en combinaisons.

Préférentiellement, le mélange maître présente un taux de phosphore supérieur à 600 ppm, de préférence allant de 700 ppm à 55 000 ppm.

Préférentiellement, ledit additif organophosphoré est choisi dans le groupe constitué par les triesters d'acide phosphorique, les phosphonates, les phosphinates et les mélanges de ces composés.

Préférentiellement, ledit additif organophosphoré est choisi dans le groupe constitué par les triesters d'acide phosphorique, les phosphonates et les mélanges de ces composés.

Préférentiellement, ledit additif organophosphoré est choisi dans le groupe constitué par les triesters d'acide phosphorique et les mélanges de ces composés.

Préférentiellement, l'additif organophosphoré répond à la formule (1) : 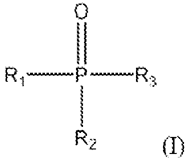 dans laquelle :
- R1 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20 ;
- R2 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20; et
- R3 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20.

Préférentiellement, l'additif organophosphoré répond à la formule (I) dans laquelle :
- R1 est choisi dans le groupe constitué par les alkyles en C1-C20, les aryles en C6-C20 et les groupes O-Ra avec Ra un radical choisi dans le groupe constitué par les alkyles en C1-C20 et les aryles en C6-C20;
- R2 est choisi dans le groupe constitué par les alkyles en C1-C20, les aryles en C6-C20, et les groupes O-Ra avec Ra un radical choisi dans le groupe constitué par les alkyles en C1-C20 et les aryles en C6-C20; et
- R3 est choisi dans le groupe constitué par les alkyles en C1-C20, les aryles en C6-C20 et les groupes O-Ra avec Ra un radical choisi dans le groupe constitué par les alkyles en C1-C20 et les aryles en C6-C20.

Préférentiellement, l'additif organophosphoré répond à la formule (Ia): 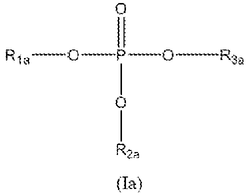 dans laquelle R1a, R2a, R3a, identiques ou différents, sont choisis dans le groupe constitué par les alkyles en C1-C20, les aryles en C6-C20, les alkyl(C1-C20)aryles en C6-C20 et les aryl(C6-C20)alkyles en C1-C20.

Préférentiellement, dans la formule (Ia), R1a, R2a, R3a, identiques ou différents, sont choisis dans le groupe constitué par les alkyles en C1-C12, les aryles en C6-C12, les alkyl(C1-C 12)aryles en C6-C12 et les aryl(C6-C12)alkyles en C1-C12.

Préférentiellement, dans la formule (Ia) R1a, R2a, R3a, identiques ou différents, sont choisis dans le groupe constitué par les alkyles en C1-C12 et les aryles en C6-C12.

Préférentiellement, l'additif organophosphoré est choisi dans le groupe constitué par le tri(éthylhéxyl)phosphate, le 2-éthylhexyldiphénylphosphate, le tri-n-octylphosphate, le triisobutylphosphate et leurs mélanges.

Préférentiellement, le polymère modifié est un élastomère diénique.

Préférentiellement, le polymère modifié est choisi dans le groupe constitué par le caoutchouc naturel, les polyisoprènes de synthèse, les polybutadiènes, les copolymères d'isoprène, les copolymères de butadiène et les mélanges de ces polymères.

Préférentiellement, le polymère initial est choisi dans le groupe constitué par le caoutchouc naturel, les polyisoprènes de synthèse, les copolymères d'isoprène et les mélanges de ces polymères.

Préférentiellement, l'additif organophosphoré est utilisé à un taux supérieur ou égal à 0,3 pcp ; plus préférentiellement supérieur ou égal à 0,4 pcp ; encore plus préférentiellement supérieur ou égal à 0,5 pcp.

Préférentiellement, l'additif organophosphoré est utilisé à un taux compris dans un domaine allant de 0,3 pcp à 20pcp, de préférence compris dans un domaine allant de 0,4 pcp à 10 pcp.

Préférentiellement, l'agent de greffage 1,3-dipolaire comprend outre le dipôle oxyde de nitrile, au moins une fonction chimique choisie dans le groupe constitué par les hétérocycles azotés ou soufré éventuellement substitués, les esters, les oxiranes, les carbonates et les amines tertiaires.

Préférentiellement, l'agent de greffage 1,3 dipolaire comprend outre le dipôle oxyde de nitrile, au moins une fonction chimique choisie dans le groupe constitué par les hétérocycles azotés éventuellement substitués, tels les imidazoles ou benzoimidazoles substitués ou non substitués, les oxiranes et les carbonates.

Préférentiellement, le polymère modifié en présence dudit additif organophosphoré présente un taux molaire d'agent de greffage 1,3-dipolaire greffé supérieur à celui d'un polymère modifié obtenu dans les mêmes conditions de greffage mais sans la présence d'additif organophosphoré.

Un autre objet de la présente invention concerne une composition à base d'au moins un mélange maître défini ci-dessus ou susceptible d'être obtenu selon le procédé décrit ci-dessus.

Préférentiellement, la composition comprend en outre au moins une charge renforçante et au moins un système de réticulation.

Un autre objet de la présente invention est un article comprenant au moins une composition ci-dessus.

Un autre objet de la présente invention concerne un bandage pneumatique ou non pneumatique comprenant au moins une composition ci-dessus.

### 4-DESCRIPTION DETAILLEE DE L'INVENTION

L'invention a donc pour objet un procédé de fabrication d'un mélange maître comprenant les étapes suivantes :
(a) mettre en contact au moins un polymère initial comportant au moins une insaturation carbone-carbone avec au moins un agent de greffage 1,3-dipolaire porteur d'au moins un dipôle oxyde de nitrile en présence d'un au moins un additif organophosphoré choisi dans le groupe constitué par les triesters d'acide phosphorique, les phosphonates, les phosphinates, les oxydes de phosphines et les mélanges de ces composés,
(b) récupérer le mélange maître obtenu à l'étape précédente.

Par « mélange-maître » on entend au sens de la présente invention une composition qui comprend au moins un polymère mélangé à un ou plusieurs additifs, ledit ou lesdits additifs étant dispersés dans le polymère, ledit ou lesdits additifs pouvant être par exemple, une charge, éventuellement renforçante, un plastifiant ou tout autre type d'additif. Le mélange maître (ou « masterbatch en anglais) est une composition « primaire » dans le sens où l'on mélange une première fois deux composés de nature chimique différente ensemble, cette composition « primaire » étant ensuite mélangée (second mélange) à d'autres ingrédients pour former une composition finale, comme par exemple une composition de caoutchouc destinées à la fabrication d'une bande de roulement. Par exemple, pour obtenir une composition, notamment de caoutchouc, on ajoute un ou plusieurs additifs à un mélange-maître constitué d'un élastomère et de noir de carbone, tels que par exemple une huile plastifiante un système de vulcanisation, etc.

Le mélange-maître de l'invention ou susceptible d'être obtenu à partir du procédé de fabrication de l'invention comprend au moins un additif organophosphoré et au moins un polymère modifié, en présence dudit additif organophosphoré, par un agent de greffage 1,3-dipolaire porteur d'au moins un dipôle oxyde de nitrile et d'au moins une fonction chimique.

Avantageusement, le mélange maître de l'invention ou susceptible d'être obtenu à partir du procédé de fabrication de l'invention, consiste essentiellement en (plus préférentiellement encore consiste en) un additif organophosphoré et un polymère modifié, en présence dudit additif organophosphoré, par un agent de greffage 1,3-dipolaire porteur d'au moins un dipôle oxyde de nitrile et d'au moins une fonction chimique.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et les caractéristiques de l'invention.

L'expression « alkyle en Cᵢ-Cⱼ » désigne un groupe hydrocarboné linéaire, ramifié ou cyclique comprenant de i à j atomes de carbone ; i et j étant des nombres entiers.

L'expression « aryle en Ci-Cj » désigne un groupe aromatique comportant de i à j atomes de carbone ; i et j étant des nombres entiers.

L'expression « alkyl(Ci-Cj)aryle en Ck-Cn » désigne un groupe alkyle comprenant de i à j atomes de carbone rattaché au reste de la molécule par un groupe aryle comprenant de k à n atomes de carbone.

L'expression « aryl(Ci-Cj)alkyle en Ck-Cn » désigne un groupe aryle comprenant de i à j atomes de carbone rattaché au reste de la molécule par un groupe alkyle comprenant de k à n atomes de carbone.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les charges, etc.

Par l'expression « partie en poids pour cent parties en poids de polymère » (ou pcp), il faut entendre au sens de la présente invention, la partie, en masse pour cent parties en masse de polymère. Lorsque le polymère est un élastomère ou un élastomère diénique, on parlera alors de pce, c'est-à-dire « partie en poids pour cent parties en poids d'élastomère » ; il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b). Dans la présente, lorsqu'on désigne un intervalle de valeurs par l'expression « de a à b », on désigne également et préférentiellement l'intervalle représenté par l'expression « entre a et b ».

Par « polymère modifié obtenu par greffage » ou « polymère modifié par greffage » ou « polymère modifié par un agent de greffage », on entend un polymère comprenant des fonctions chimiques qui ont été introduites le long de la chaîne polymère via une réaction de greffage d'un agent de greffage apte à greffer lesdites fonctions chimiques sur une chaîne du polymère. En pratique, le polymère modifié est obtenu par réaction de greffage, lors de la mise en contact d'un polymère initial comportant au moins une insaturation carbone-carbone avec au moins un additif organophosphoré et au moins un agent de greffage 1,3 -dipolaire portant au moins une fonction chimique et portant au moins un dipôle oxyde de nitrile, ledit dipôle oxyde de nitrile étant apte à former une liaison covalente avec une insaturation de la chaîne du polymère. Lors de la réaction de greffage, le dipôle oxyde de nitrile de l'agent de greffage 1,3-dipolaire forme des liaisons covalentes avec la ou les insaturations de la chaîne du polymère. Le polymère modifié comprend les fonctions chimiques portés par l'agent de greffage 1,3-dipolaire qui ont été greffées sur sa chaîne via le dipôle oxyde de nitrile et qui sont réparties de manière aléatoire le long de la chaîne.

De manière connue, un polymère comprend généralement au moins une chaîne polymère principale. Cette chaîne polymère peut être qualifiée de principale à partir du moment où toutes les autres chaînes du polymère sont considérées comme des chaînes pendantes comme le mentionne le document « Glossary of basic terms in polymer science » (IUPAC recommandations 1996), PAC, 1996, 68, 2287, p2294.

Par « insaturation carbone-carbone» on entend une liaison covalente multiple entre deux atomes de carbone ; cette liaison covalente multiple pouvant être une double liaison carbone-carbone ou une triple liaison carbone-carbone, de préférence une double liaison carbone-carbone.

Par « chaîne du polymère initial », on entend au sens de la présente invention, la chaîne du polymère avant la réaction de greffage ; cette chaîne comprenant au moins une insaturation, notamment carbone-carbone, plus préférentiellement au moins deux insaturations, notamment carbone-carbone, susceptible(s) de réagir avec l'agent de greffage 1,3-dipolaire porteur d'au moins un dipôle oxyde de nitrile. Le polymère initial est donc le polymère servant de réactif de départ lors de la réaction de greffage. La réaction de greffage permet à partir d'un polymère initial d'obtenir un polymère modifié.

De préférence, ce polymère initial est un élastomère comportant au moins une insaturation carbone-carbone, plus préférentiellement encore est un élastomère diénique.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en mol); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % en mol).

On entend particulièrement par élastomère diénique susceptible d'être utilisé dans le cadre de la présente invention :
- tout homopolymère d'un monomère diène, conjugué ou non, ayant de 4 à 18 atomes de carbone ;
- tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre de diènes non conjugués conviennent les diènes non conjugués ayant de 6 à 12 atomes de carbone, tels que le 1,4-hexadiène, l'éthylidène norbomène, le dicyclopentadiène.

À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial « vinyle-toluène », le para-tertiobutylstyrène.

À titre d'α-monooléfines aliphatiques conviennent notamment les α-monooléfines aliphatiques acycliques ayant de 3 à 18 atomes de carbone.

Plus particulièrement, l'élastomère diénique peut être :
- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- un copolymère d'isobutène et d'isoprène (caoutchouc butyle), ainsi que les versions halogénées, en particulier chlorées ou bromées, de ce type de copolymère ;
- tout copolymère obtenu par copolymérisation d'un ou plusieurs diènes, conjugués ou non, avec l'éthylène, une α-monooléfine ou leur mélange comme par exemple les élastomères obtenus à partir d'éthylène, de propylène avec un monomère diène non conjugué du type précité.

Préférentiellement, le polymère initial est, de préférence un élastomère diénique, choisi dans le groupe constitué par les copolymères d'éthylène-propylène-monomère diène (EPDM), le caoutchouc butyle (IRR), le caoutchouc naturel (NR), les polyisoprènes de synthèse (IR), les polybutadiènes (BR), les copolymères de butadiène, les copolymères d'isoprène et les mélanges de ces élastomères.

Préférentiellement, le polymère initial est, de préférence un élastomère diénique, choisi dans le groupe constitué par les copolymères d'éthylène-propylène-monomère diène (EPDM), le caoutchouc butyle (IRR), le caoutchouc naturel (NR), les polyisoprènes de synthèse (IR), les polybutadiènes (BR), les copolymères de butadiène-styrène (SBR), les copolymères d'éthylène-butadiène (EBR), les copolymères d'éthylène-isoprène (EIR), les copolymères d'isoprène-butadiène (BIR) ou les copolymères d'isoprène-butadiène-styrène (SBIR), les copolymères d'isobutène-isoprène (caoutchouc butyle - IIR), les copolymères d'isoprène-styrène (SIR) et les mélanges de ces élastomères.

Préférentiellement, le polymère initial est, de préférence un élastomère diénique, choisi dans le groupe constitué par les copolymères d'éthylène-propylène-monomère diène, le caoutchouc butyle et le mélange de ces caoutchoucs.

Préférentiellement, le polymère initial est, de préférence un élastomère diénique, choisi dans le groupe constitué par le caoutchouc naturel, les polyisoprènes de synthèse, les polybutadiènes, les copolymères de butadiène, les copolymères d'isoprène et les mélanges de ces élastomères.

Plus préférentiellement, le polymère initial est, de préférence un élastomère diénique, choisi dans le groupe constitué par le caoutchouc naturel, les polyisoprènes de synthèse, les polybutadiènes, les copolymères de butadiène-styrène, les copolymères d'éthylène-butadiène, les copolymères d'éthylène-isoprène, les copolymères d'isoprène-butadiène, les copolymères d'isoprène-butadiène-styrène, les copolymères d'isobutène-isoprène, les copolymères d'isoprène-styrène et les mélanges de ces élastomères.

Préférentiellement, le polymère initial est, de préférence un élastomère diénique, est choisi dans le groupe constitué par les polybutadiènes, les copolymères de butadiène, les copolymères d'isoprène et les mélanges de ces élastomères.

Plus préférentiellement, le polymère initial est un élastomère diénique choisi dans le groupe constitué par les polybutadiènes, les copolymères de butadiène-styrène, les copolymères d'éthylène-butadiène, les copolymères d'isoprène-butadiène, les copolymères d'isoprène-butadiène-styrène, les copolymères d'isobutène-isoprène, les copolymères d'isoprène-styrène et les mélanges de ces élastomères.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418-08) comprise entre 0°C et - 90°C et plus particulièrement entre - 10°C et - 70°C, une teneur en styrène comprise entre 1% et 60% en poids et plus particulièrement entre 20% et 50%, une teneur (% molaire) en liaisons -1,2 de la partie butadiènique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5 % et 50 % en poids et une Tg comprise entre - 5 C et - 50°C. Dans le cas des copolymères de butadiène-styrène-isoprène conviennent notamment ceux ayant une teneur en styrène comprise entre 5 % et 50 % en poids et plus particulièrement comprise entre 10 % et 40 %, une teneur en isoprène comprise entre 15 % et 60 % en poids et plus particulièrement entre 20 % et 50 %, une teneur en butadiène comprise entre 5 % et 50 % en poids et plus particulièrement comprise entre 20 % et 40 %, une teneur (% molaire) en unités -1,2 de la partie butadiènique comprise entre 4 % et 85 %, une teneur (% molaire) en unités trans -1,4 de la partie butadiènique comprise entre 6 % et 80 %, une teneur (% molaire) en unités -1,2 plus -3,4 de la partie isoprènique comprise entre 5 % et 70 % et une teneur (% molaire) en unités trans -1,4 de la partie isoprènique comprise entre 10 % et 50 %, et plus généralement tout copolymère butadiène-styrène-isoprène ayant une Tg comprise entre - 5°C et - 70°C.

Préférentiellement, le polymère initial est, de préférence un élastomère diénique, est choisi dans le groupe constitué par le caoutchouc naturel, les polyisoprènes de synthèse, les copolymères d'isoprène et les mélanges de ces élastomères. Les polyisoprènes de synthèse sont de préférence des polyisoprènes cis1,4-de synthèse. Parmi ces polyisoprènes de synthèse, sont utilisés préférence des polyisoprènes ayant un taux molaire de liaison cis-1,4 supérieur à 90 %, plus préférentiellement encore supérieur à 98 %. Parmi les différents copolymères d'isoprène, on citera en particulier, les copolymères d'isobutène-isoprène, d'éthylène-isoprène, d'isoprène-styrène, d'isoprène-butadiène ou d'isoprène-butadiène-styrène.

Les polymères initiaux, de préférence les élastomères, plus préférentiellement les élastomères diéniques, peuvent avoir toute microstructure qui est fonction des conditions de polymérisation utilisées. Ces polymères, peuvent être par exemple à blocs, statistiques, séquencés, microséquencés, et être préparés en dispersion en émulsion ou en solution. Ils peuvent être couplés et/ou étoilés, par exemple au moyen d'un atome silicium ou d'étain qui lie entre elles les chaînes polymères.

Comme vu précédemment, ledit polymère initial est mis en contact avec au moins un agent de greffage 1,3-dipolaire porteur d'au moins un dipôle oxyde de nitrile en présence d'un additif organophosphoré choisi dans le groupe constitué par les triesters d'acide phosphorique, les phosphonates, les phosphinates, les oxydes de phosphines et les mélange de ces composés.

Par « agent de greffage 1,3-dipolaire » on entend un composé 1,3-dipolaire apte à réaliser une réaction de greffage sur un polymère comportant au moins une insaturation carbone-carbone. Le composé 1,3-dipolaire (ou agent de greffage 1,3-dipolaire) est un composé chimique électriquement neutre portant au moins au moins un dipôle, c'est-à-dire une charge positive et une charge négative dans l'une de leurs principales formules canoniques, et capable de former une cycloaddition dipolaire [1,3] sur une liaison carbone-carbone insaturée. Pour plus de détail, l'homme du métier peut se référer à la définition donnée par l'IUPAC (International Union of Pure And Applied Chemistry) dans le glossaire des noms de classes de composés organiques et des intermédiaires de réactivité basée sur la structure (IUPAC Recommandations 1995, PAC, 1995, 67,1307).

L'agent de greffage 1,3 dipolaire comprend au moins un dipôle oxyde de nitrile apte à réagir avec au moins une insaturation carbone-carbone du polymère initial et au moins une fonction chimique. Cette fonction chimique peut être tout groupe d'atomes qui une fois greffé sur le polymère permet d'en modifier les propriétés chimiques et physiques par rapport au polymère non greffé (polymère initial). A titre d'exemple de ces fonctions chimiques, on peut notamment citer, par exemple, celles permettant d'assurer une bonne interaction polymères-charges renforçantes lorsque le polymère modifié est mélangé à des charges renforçantes telles que les esters, les oxazolines, les thiazolines etc.

A titre d'agents de greffage 1,3-dipolaire porteur d'au moins un dipôle oxyde de nitrile utilisables dans le cadre de la présente invention, on peut citer ceux des documents WO2015059269A1, WO2015177104A1, WO2017009150A1, WO2019102128A1.

Plus préférentiellement, l'agent de greffage peut posséder outre le dipôle oxyde de nitrile, une fonction chimique ; cette fonction chimique pouvant être choisie dans le groupe constitué par une chaîne hydrocarbonée, les hétérocycles azotés ou soufré éventuellement substitués, les esters, les oxiranes substitués ou non substitués, les carbonates, les amines tertiaires.

La chaîne hydrocarbonée peut éventuellement contenir un hétéroatome. Elle peut être linéaire, cyclique ou ramifiée ; éventuellement interrompue par au moins un hétéroatome et/ou dans laquelle au moins un atome d'hydrogène porté par un atome de carbone a été substitué par un hétéroatome. De préférence la chaîne hydrocarbonée comprend de 1 à 24 atomes de carbone.

Parmi les hétérocycles azotés ou soufrés peuvent convenir notamment ceux qui comprennent 5 à 6 membres. Ils peuvent être saturés ou insaturés et éventuellement être substitués par un groupe hydrocarboné en C1-C20. De préférence, les hétérocycles azotés ou soufrés peuvent être choisis parmi les cycles 2H-1,3-oxazolines éventuellement substitués, les cycles 2H-1,3-thiazolines éventuellement substitués, les cycles 5,6-dihydro-4H-1,3-oxazines éventuellement substitués, les cycles 5,6-dihydro-4H-1,3-thiazines éventuellement substitués, les cycles imidazoles éventuellement substitués, les substituants étant ceux définis ci-dessus.

Parmi les esters peuvent convenir notamment ceux répondant à la formule C(O)-OR10 avec R10 représentant un groupe hydrocarboné en C1-C20, de préférence en groupe hydrocarboné C1-C12, de manière plus préférée représentant en groupe hydrocarboné C1-C6. De préférence, R10 est un alkyle en C1-C6, de manière plus préférée R10 est un méthyle ou un éthyle.

Parmi les amines tertiaires peuvent notamment convenir celles répondant à la formule -NR13R14 dans lequel R13 et R14, identiques ou différents, représentent un alkyle en C1-C6. On peut citer, par exemple, un groupe N,N-diméthylamino, un groupe N,N-diéthylamino, un groupe N-éthyl,N-propylamino. De préférence, R13 et R14 sont identiques et sont un méthyle.

Parmi les oxiranes substitués ou non substitués peuvent notamment convenir les oxiranes non substitués et les oxiranes substitués par des groupes alkyles en C1-C6 ou aryles en C6-C12.

Plus préférentiellement encore, l'agent de greffage 1,3 dipolaire comprend outre le dipôle oxyde de nitrile, au moins une fonction chimique choisie dans le groupe constitué par les hétérocycles azotés éventuellement substitués, tels les imidazoles ou benzoimidazoles substitués ou non substitués, les oxiranes substitués ou non substitués et les carbonates.

Plus préférentiellement encore, l'agent de greffage 1,3 dipolaire comprend outre le dipôle oxyde de nitrile, au moins une fonction chimique choisie dans le groupe constitué par les imidazoles ou benzoimidazoles substitués ou non substitués et les oxiranes substitués ou non substitués.

Dans la suite de la description et par soucis de concision et de clarté, les agents de greffage 1,3-dipolaires porteur d'au moins un dipôle oxyde de nitrile et d'au moins une fonction chimique, définis ci-dessus seront désignés par l'expression « agent de greffage 1,3-dipolaire » ou « composés 1,3-dipolaire ».

Dans le procédé de l'invention, la modification du polymère par l'agent de greffage 1,3-dipolaire décrit ci-dessus s'effectue en présence d'au moins un additif organophosphoré choisi dans le groupe constitué par les triesters d'acide phosphorique, les phosphonates, les phosphinates, les oxydes de phosphines et les mélange de ces composés. De manière surprenante, le demandeur a trouvé que certains composés organiques, notamment ceux contenant au moins un atome de phosphore et un ou plusieurs atomes d'oxygène permettaient d'améliorer significativement le rendement de greffage d'un agent de greffage 1,3-dipolaire porteur d'au moins un dipôle oxyde de nitrile sur un polymère comprenant au moins une insaturation carbone-carbone, en particulier sur un élastomère diénique. De manière surprenante, la présence de cet additif organophosphoré permet de simplifier le procédé en rendant optionnelle l'étape de traitement thermique des procédés de l'art antérieur.

Par « additif organophosphoré » on entend au sens de la présente invention un composé chimique organique comportant au moins un atome de phosphore et au moins un atome d'oxygène. Lorsque ce composé est mis en contact avec l'agent de greffage 1,3-dipolaire et le un polymère initial comportant au moins une instauration carbone-carbone, il favorise la réaction de greffage dudit agent de greffage 1,3-dipolaire sur ledit polymère.

Plus préférentiellement, l'additif organophosphoré est choisi dans le groupe formé par les triesters d'acide phosphorique, les phosphonates, les phosphinates et les mélanges de ces composés.

Ces composés sont connus et utilisés notamment dans les domaines de la construction comme mastique ou bien comme retardateurs de flamme. Ils sont disponibles commercialement auprès des fournisseurs comme par exemple « ABCR », « Sigma-Aldrich » et « Alfa Chemistry ».

Plus préférentiellement encore, l'additif organophosphoré est choisi dans le groupe formé par les triesters d'acide phosphorique, les phosphonates et les mélanges de ces composés.

Plus préférentiellement encore, l'additif organophosphoré est choisi dans le groupe formé par les triesters d'acide phosphorique et leurs mélanges de ces composés.

Parmi les additifs de greffage utilisables dans le cadre de l'invention, on peut citer les composés de formule (I): 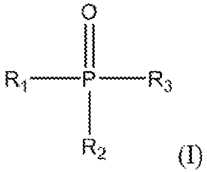 dans laquelle :
- R1 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20 ;
- R2 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20;
- R3 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20.

Plus préférentiellement encore, l'additif organophosphoré est un composé de formule (I) 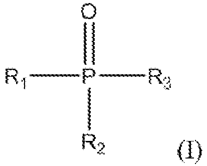 dans laquelle :
- R1 est choisi dans le groupe constitué par les alkyles en C1-C20, les aryles en C6-C20 et les groupes O-Ra avec Ra un radical choisi dans le groupe constitué par les alkyles en C1-C20 et les aryles en C6-C20;
- R2 est choisi dans le groupe constitué par les alkyles en C1-C20, les aryles en C6-C20, et les groupes O-Ra avec Ra un radical choisi dans le groupe constitué par les alkyles en C1-C20 et les aryles en C6-C20;
- R3 est choisi dans le groupe constitué par les alkyles en C1-C20, les aryles en C6-C20 et les groupes O-Ra avec Ra un radical choisi dans le groupe constitué par les alkyles en C1-C20 et les aryles en C6-C20.

Parmi les additifs de greffage de formule (I), les composés répondant à la formule (Ia) sont particulièrement préférés. Ils permettent d'améliorer le rendement de greffage de l'agent de greffage 1,3-dipolaire porteur d'au moins un dipôle oxyde de nitrile sur un polymère comprenant au moins une insaturation carbone-carbone, en particulier sur un élastomère diénique. Avantageusement, ces composés de formule (Ia) permettent d'obtenir de très bon rendement de greffage à température ambiante, en particulier à une température de greffage inférieure ou égale à 35°C, plus préférentiellement comprise entre 5°C et 35°C.

Ainsi, préférentiellement, l'additif organophosphoré répond à la formule (Ia) : 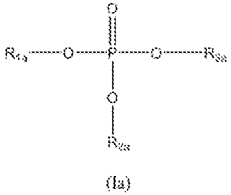 dans laquelle R1a, R2a, R3a, identiques ou différents, sont choisis dans le groupe constitué par les alkyles en C1-C20, les aryles en C6-C20, les alkyl(C1-C20)aryles en C6-C20 et les aryl(C6-C20)alkyles en C1-C20.

Préférentiellement, dans la formule (Ia), R1a, R2a, R3a, identiques ou différents, sont choisis dans le groupe constitué par les alkyles en C1-C12, les aryles en C6-C12, les alkyl(C1-C 12)aryles en C6-C12 et les aryl(C6-C12)alkyles en C1-C12.

Plus préférentiellement encore dans la formule (Ia), R1a, R2a, R3a, identiques ou différents, sont choisis dans le groupe constitué par les alkyles en C1-C12 et les aryles en C6-C12.

Plus préférentiellement encore, l'additif organophosphoré est choisi dans le groupe constitué par le tri(éthylhéxyl)phosphate, le 2-éthylhexyldiphénylphosphate, le tri-n-octylphosphate, le triisobutylphosphate et leurs mélanges.

L'ordre de la mise en contact des différents réactifs de départ pour réaliser la réaction de greffage est indifférent et est réalisé par tous moyens connus.

Selon un mode de réalisation préférée, la mise en contact de l'agent de greffage 1,3-dipolaire, du polymère initial et de l'additif organophosphoré peut être réalisée simultanément à leur introduction, par exemple, dans un mélangeur.

Selon un autre mode de réalisation de l'invention, ces incorporations peuvent également être décalées dans le temps de quelques dizaines de secondes à quelques minutes. Ainsi, préférentiellement, l'additif organophosphoré est mis en contact avec le polymère préalablement à leur mise en contact avec l'agent de greffage 1,3 dipolaire.

Selon un autre mode de réalisation préféré, l'additif organophosphoré est mis en contact avec l'agent de greffage 1,3 dipolaire préalablement à leur mise en contact avec le polymère.

Le greffage de l'agent de greffage 1,3-dipolaire sur le polymère initial s'effectue par cycloaddition [3+2] du dipôle oxyde de nitrile dudit agent de greffage sur une insaturation carbone-carbone de la chaîne du polymère initial, cette cycloaddition s'effectuant en présence de l'additif organophosphoré défini ci-dessus. Lors de cette réaction, le dipôle oxyde de nitrile de l'agent de greffage 1,3-dipolaire forme des liaisons covalentes avec la chaîne du polymère initial. On obtient un polymère modifié portant le long de sa chaîne principale, réparties de manière aléatoire le long de la chaîne, une ou plusieurs fonctions chimiques pendantes issues de la réaction de greffage de l'agent de greffage 1,3-dipolaire.

De manière surprenante, l'additif organophosphoré favorise cette réaction de cycloaddition et donc le nombre d'agent de greffage 1,3-dipolaire qui vont se greffer sur la chaîne du polymère initial. Grâce à la présence de l'additif organophosphoré, l'agent de greffage 1,3-dipolaire peut être rapidement et facilement se greffer sur ledit polymère initial à une température inférieure à 35°C à pression atmosphérique, plus préférentiellement comprise dans un domaine allant de 5°C à 35°C, plus préférentiellement encore de 10°C à 35°C, sans qu'il soit nécessaire d'effectuer un traitement thermique ultérieur. On obtient, par ailleurs, de très bon rendement de greffage. Par « rendement de greffage » ou par « rendement », on entend le taux en pourcentage molaire d'agent de greffage 1,3-dipolaire greffé sur la chaîne du polymère initial, en particulière de l'élastomère diénique, par rapport au taux en pourcentage molaire d'agent de greffage 1,3-dipolaire introduit comme réactif de départ. Le rendement de greffage peut être déterminé par les méthodes conventionnelles d'analyses des polymères, telles que par exemple l'analyse RMN ¹H.

Selon un mode particulièrement préféré de la mise en oeuvre du procédé de l'invention ; les étapes (a) et (b) s'effectuent à une température inférieure ou égale à 35°C, de préférence comprise dans un domaine allant de 5°C à 35°C, plus préférentiellement encore de 10°C à35°C.

Selon un autre mode de réalisation de l'invention, le procédé peut comprendre en outre une étape de traitement thermique (a'), postérieure à l'étape de mise en contact (a). Préférentiellement, l'étape de traitement thermique (a') s'effectue à une température supérieure à 35°C, de préférence supérieure ou égale à 36°C, plus préférentiellement encore à une température comprise dans un domaine allant de 36°C à 180°C, plus préférentiellement allant de 36°C à 150°C.

Le greffage de l'agent de greffage 1,3-dipolaire, en présence de l'additif organophosphoré, peut être réalisé en masse, par exemple dans un mélangeur interne ou un mélangeur externe tel qu'un mélangeur à cylindres. Il peut aussi être réalisé en solution, en continu ou en discontinu.

Selon un mode de réalisation de l'invention, le taux molaire (en pourcentage molaire (% mol)) de l'agent de greffage 1,3-dipolaire qui est mis en contact peut être compris dans un domaine allant de 0,01 % à 10 % mol, de préférence de 0,01 % à 5 % mol. Par « taux molaire de l'agent de greffage 1,3-dipolaire », on entend le nombre de moles d'agent de greffage 1,3-dipolaire greffées pour 100 moles d'unités monomères du polymère.

Selon un mode de réalisation de l'invention, l'additif organophosphoré est utilisé à un taux supérieur ou égal à 0,3 partie en poids pour cent parties en poids de polymère (pcp), plus préférentiellement supérieur ou égal à 0,4 pcp, encore plus préférentiellement supérieur ou égal à 0,5 pcp. Plus préférentiellement encore, l'additif organophosphoré est utilisé à un taux compris dans un domaine allant de 0,3 à 30 pcp, de préférence compris dans un domaine allant de 0,4 à 25 pcp.

Un autre objet de la présente divulgation (non revendiqué) est un mélange maître obtenu par le procédé décrit ci-dessus.

Un autre objet de la présente invention concerne un mélange maître à base d'au moins un additif organophosphoré, d'au moins un polymère initial comportant au moins une instauration carbone-carbone et au moins un agent de greffage 1,3-dipolaire porteur d'au moins un dipôle oxyde de nitrile, ledit additif organophosphoré étant choisi dans le groupe constitué par les triesters d'acide phosphorique, les phosphonates, les phosphinates, les oxydes de phosphines et les mélanges de ces composés.

Un autre objet de la présente divulgation (non revendiqué) concerne un mélange maître comprenant au moins un additif organophosphoré et au moins un polymère modifié, en présence dudit additif organophosphoré, par au moins un agent de greffage 1,3-dipolaire porteur d'au moins un dipôle oxyde de nitrile, ledit additif organophosphoré étant choisi dans le groupe constitué par les triesters d'acide phosphorique, les phosphonates, les phosphinates, les oxydes de phosphines et les mélanges de ces composés.

Le polymère modifié qui est un constituant du mélange maître et qui est obtenu par greffage d'un agent de greffage 1,3-dipolaire décrit ci-dessus, en présence dudit additif organophosphoré présente un taux molaire d'agent de greffage 1,3-dipolaire greffé supérieur à celui d'un polymère modifié obtenu dans les mêmes conditions de greffage mais sans la présence d'additif organophosphoré. Le mélange maître de l'invention, du fait de ce taux molaire d'agent de greffage 1,3 dipolaire greffé supérieur, présente donc des propriétés différentes par rapport à un polymère modifié obtenu dans les mêmes conditions de greffage, c'est-à-dire mêmes conditions de température, de durée, d'ordre d'ajout des réactifs, etc, mais sans la présence dudit additif organophosphoré utilisé dans le cadre de l'invention.

Par « taux molaire d'agent de greffage 1,3-dipolaire greffé» on entend au sens de la présente invention, le nombre de moles d'agent de greffage 1,3-dipolaire greffées pour 100 moles d'unités monomères du polymère. Ce taux molaire peut être déterminé par des mesures classiques de caractérisation des polymères, comme par exemple la RMN.

Préférentiellement, le mélange maître présente un taux de phosphore supérieur à 600 ppm, de préférence allant de 700 ppm à 55 000 ppm (ppm=partie par million) et le polymère modifié le constituant présente un taux molaire d'agent de greffage 1,3-dipolaire greffé supérieur au taux molaire d'agent de greffage 1,3-dipolaire d'un polymère modifié obtenu dans les mêmes conditions de greffage mais sans la présence d'additif organophosphoré.

Le taux de phosphore est déterminé par spectrométrie d'émission atomique par plasma à couplage inductif ICP-AES selon la méthode décrite ci-après.

Préférentiellement, le polymère modifié du mélange maître est celui qui a été décrit ci-dessus. Préférentiellement le polymère modifié est un élastomère, de préférence diénique. Plus préférentiellement encore, le polymère modifié est choisi dans le groupe constitué par le caoutchouc naturel, les polyisoprènes de synthèse, les polybutadiènes, les copolymères de butadiène, les copolymères d'isoprène et les mélanges de ces polymères.

L'agent de greffage 1,3-dipolaire porteur d'au moins un dipôle oxyde de nitrile et d'au moins une fonction chimique du mélange maître et l'additif organophosphoré du mélange maître sont ceux qui ont été décrits ci-dessus, y compris leurs modes préférés. Préférentiellement, l'additif organophosphoré est un composé de formule (I) décrite précédemment, y compris ses formes préférées. Plus préférentiellement encore, l'additif organophosphoré répond à la formule (Ia) décrite ci-dessus, y compris ses modes préférées.

Un autre objet de la présente invention est une composition à base d'au moins un mélange-maître défini ci-avant ou susceptible d'être obtenu par le procédé de l'invention. La composition peut préférentiellement comprendre en outre tout additif connu de l'homme du métier, telle qu'une charge, renforçante ou non renforçante, un colorant, un anti-oxydant, une résines, des ignifugeants, des lubrifiants etc.

Un autre objet de la présente divulgation (non revendiqué) concerne une composition de caoutchouc à base d'au moins un mélange maître défini ci-dessus ou susceptible d'être obtenu par le procédé décrit ci-dessus, d'au moins une charge renforçante et d'au moins un système de réticulation.

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par charge, on entend ici tout type de charge, qu'elle soit renforçante ou qu'elle soit non-renforçante ou inerte.

Selon un mode de réalisation, la composition de caoutchouc peut comprendre une ou plusieurs charges renforçantes.

On peut utiliser tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés..

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g.

Dans le présent exposé, la surface spécifique BET de la charge inorganique, telle que la silice par exemple, est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

La composition peut préférentiellement comprendre en outre, en outre un système de réticulation.

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels que l'oxyde de zinc, l'acide stéarique ou tout composé équivalent tels que les sels d'acide stéarique et sels de métaux de transition, les dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé « MBTS »), N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBSI »), disulfure de tetrabenzylthiurame (« TBZTD »), dibenzyldithiocarbamate de zinc (« ZBEC ») et les mélanges de ces composés.

La composition de caoutchouc conforme à l'invention peut comporter également tout ou partie des additifs et agents de mise en oeuvre usuels, connus de l'homme de l'art et habituellement utilisés dans les compositions, notamment dans les compositions de caoutchouc pour pneumatiques, en particulier de bandes de roulement, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue et des résines renforçantes (telles que décrites par exemple dans la demande WO 02/10269)

La composition de caoutchouc peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment le mélange-maître conforme à l'invention, les charges, les éventuels autres additifs divers, à l'exception du système de réticulation. L'incorporation de la charge au mélange-maître peut être réalisée en une ou plusieurs fois en malaxant thermomécaniquement. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

La composition de caoutchouc finale ainsi obtenue peut être ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement dans un bandage pneumatique ou non pneumatique.

La composition de caoutchouc peut être soit à l'état cru (avant réticulation ou vulcanisation), soit à l'état cuit (après réticulation ou vulcanisation), peut être un produit semi-fini qui peut être utilisé dans un bandage pneumatique ou non pneumatique.

La réticulation de la composition peut être conduite de manière connue de l'homme du métier, par exemple à une température comprise entre 80°C et 200°C, sous pression.

Un autre objet de la présente invention concerne un article, notamment en caoutchouc, comprenant au moins une composition, notamment de caoutchouc, définie ci-dessus. L'article en caoutchouc peut être n'importe quel type d'article tel que une durite, un tuyau, un joint d'étanchéité, un joint torique, une courroie de transmission, un support moteur, un système anti-vibration, un profilé de fenêtre, un profilé d'étanchéité de caisse et de vitres de voiture, un isolant pour câbles électriques, une semelle de chaussure, un tapis en caoutchouc, une bande transporteuse, un article semi-fini pour un bandage pneumatique ou non pneumatique, un bandage pneumatique ou non pneumatique.

Les produits semi-finis pour un bandage pneumatique ou non pneumatique sont des produits en caoutchouc destinés à la fabrication d'un bandage pneumatique ou non pneumatique. Ce peut être tout type bande de gommes, telle que notamment des bandes de roulement, des sous-couches, des nappes d'armature de sommet (par exemple des nappes de travail, des nappes de protection ou des nappes de frettage), de nappes d'armature de carcasse, des nappes de flancs, des nappes de bourrelets, des nappes de protecteurs, des nappes de sous-couches, des nappes de blocs de caoutchouc et autres nappes assurant l'interface entre les zones précitées des pneumatiques. De préférence, l'article semi-fini est une bande de roulement.

Un autre objet de la présente invention concerne un bandage pneumatique ou non pneumatique comprenant au moins une composition de caoutchouc telle que définie précédemment.

Par « bandage pneumatique », on entend un bandage destiné à former une cavité en coopérant avec un élément support, par exemple une jante, cette cavité étant apte à être pressurisée à une pression supérieure à la pression atmosphérique. Par opposition, un bandage non pneumatique n'est pas apte à être pressurisé. Ainsi un bandage non pneumatique est un corps torique constitué par au moins un matériau polymérique, destiné à assurer la fonction d'un pneumatique mais sans être soumis à une pression de gonflage. Un bandage non pneumatique peut être plein ou creux. Un bandage non pneumatique creux peut contenir de l'air, mais à la pression atmosphérique, c'est-à-dire qu'il n'a pas de rigidité pneumatique apportée par un gaz de gonflage à une pression supérieure à la pression atmosphérique.

Les bandages pneumatiques ou non pneumatiques selon l'invention sont destinés à équiper des véhicules de tout type tels que les véhicules de tourisme, les véhicules à deux roues, les véhicules poids lourds, les véhicules agricoles, les véhicules de génie civil ou des avions ou, plus généralement, sur tout dispositif roulant.

### 5-EXEMPLES

Les exemples qui suivent permettent d'illustrer l'invention.

### 5.1-Test et mesures utilisées

### 5.1.1 Caractérisations du taux molaire d'agents de greffage 1,3-dipolaire greffés

La détermination du taux molaire de l'agent de greffage 1,3-dipolaire greffé est réalisée par une analyse RMN. Les spectres sont acquis sur un spectromètre « 500 MHz BRUKER » équipé d'une «CryoSonde BBFO-zgrad-5 mm». L'expérience RMN ¹H quantitative, utilise une séquence simple impulsion 30° et un délai de répétition de 5 secondes entre chaque acquisition. Les échantillons sont solubilisés dans le chloroforme deutéré (CDCl₃) dans le but d'obtenir un signal de «lock».

### 5.1.2 : Synthèse de l'agent de greffage 1,3-dipolaire : l'oxyde de 2-((2-oxiranylméthoxy)-1-napthtonitrile

L'oxyde de 2-((2-oxiranylméthoxy)-1-napthonitrile, aussi appelé 2-(glycidyloxy)-1-naphtonitrile, est synthétisé conformément au protocole décrit dans l'exemple 1 de la demande US20120046418.

### 5.1.3 : Additif organophosphoré

L'additif organophosphoré tri-(éthylhéxyl) phosphate est commercialisé par « Sigma Aldrich » sous la référence « 289922-25ML ».

L'additif organophosphoré 2-éthylhéxylediphényl phosphate est commercialisé par « VWR » sous la référence « EHERC13342300 ».

L'additif organophosphoré tri-isobutyl phosphate est commercialisé par « Alfa Chemistry » (numéro CAS : 126-71-6)

### 5.1.4 : Mesure du taux de phosphore

La détermination du taux de phosphore dans le mélange maître ou dans les polymères modifiés de l'art antérieur est réalisée par spectrométrie d'émission atomique par plasma à couplage inductif ICP-AES. Les spectres sont acquis sur un spectromètre « Arcos » de « Spectro Ametek ». Les échantillons sont mis en solution par minéralisation acide (mélange acide nitrique concentré/acide chlorhydrique concentré 80/20 vol/vol) à 130°C, dans un tube à essai fermé. Les solutions obtenues sont ensuite analysées par ICP-AES à λ = 178,287 nm.

### 5.2 : Essai n°1

Cet essai a pour but de démontrer l'avantage que procure le procédé de préparation d'un mélange maître selon l'invention par rapport à un procédé non conforme à l'invention de préparation d'un élastomère modifié par greffage d'un agent de greffage 1,3-dipolaire.

Pour cela, on réalise le greffage de l'agent de greffage 1,3-dipolaire porteur d'un oxyde de nitrile, l'oxyde de 2-((2-oxiranylméthoxy)-1-napthtonitrile, sur un polyisoprène de synthèse en présence (procédé selon l'invention) ou non (procédé de l'art antérieur) d'un additif organophosphoré. Les additifs de greffage testés sont :
- Additif A : le tri-(éthylhéxyl) phosphate ;
- Additif B : le 2-éthylhéxylediphényl phosphate et
- Additif C : le tri-isobutyl phosphate.

L'élastomère utilisé est un polyisoprène de synthèse utilisé présente une Mn = 375000 g/mol et un Ip = 3,6.

Le procédé de préparation du polymère modifié non conforme (exemple 1) est mis en oeuvre de la manière suivante :
On introduit, simultanément, sur un outil à cylindres à 23°C, 15 g du polyisoprène de synthèse (IR) précédemment décrit, 0,26 g de l'agent de greffage précédemment décrit (soit 0,5 mole d'agent de greffage pour 100 moles d'unités de répétition constitutives du polyisoprène de synthèse).

Le mélange est homogénéisé en 15 passes portefeuilles. L'ensemble du procédé se déroule à température ambiante à 23°C ; aucune étape de traitement thermique n'est effectuée. On récupère ensuite le polymère modifié pour déterminer par analyse RMN ¹H les rendements de greffage. Les résultats sont reportés dans le tableau 1.

Le procédé de préparation du mélange maître conforme à l'invention (exemple 2, 3 et 4) est mis en oeuvre de la manière suivante :
On introduit, simultanément, sur un outil à cylindres à 23°C, 15 g du polyisoprène de synthèse (IR) précédemment décrit, 0,26 g de l'agent de greffage précédemment décrit (soit 0,5 mole d'agent de greffage pour 100 moles d'unités de répétition constitutives du polyisoprène de synthèse) et 1,5g soit 10 pce de l'additif organophosphoré à tester.

Le mélange est homogénéisé en 15 passes portefeuilles. L'ensemble du procédé se déroule à température ambiante à 23°C ; aucune étape de traitement thermique n'est effectuée. On récupère ensuite le mélange maître pour déterminer par analyse RMN ¹H les rendements de greffage. Les résultats sont reportés dans le tableau 1.

**[Table 1]**

| N ° | Nature de l'additif organophosphoré | Quantité additif organophosphoré introduit (en pce) | Quantité d'agent de greffage 1,3-dipolaire introduit (en % molaire) | Taux de greffage visé (en % molaire) | Taux de greffage obtenu (en % molaire) | Rendement de greffage (en %) | Taux de phosphore (en pce) |
|---|---|---|---|---|---|---|---|
| 1 | (-) | 0 | 0,5 | 0,5 | 0,18 | 36 | <4 |
| 2 | Additif A | 10 | 0,5 | 0,5 | 0,35 | 70 | 6700 |
| 3 | Additif B | 10 | 0,5 | 0,5 | 0,28 | 56 | 8030 |
| 4 | Additif C | 10 | 0,5 | 0,5 | 0,42 | 84 | 10900 |

Au vu du tableau 1, on constate une augmentation significative du rendement de greffage de l'agent de greffage 1,3-dipolaire sur le polyisoprène de synthèse, lorsque que l'agent de greffage 1,3 dipolaire est mis en contact avec le polyisoprène de synthèse en en présence d'un additif organophosphoré et ce quelle que soit la nature chimique de l'additif organophosphoré utilisé. Cette augmentation est de 55 % pour le greffage du composé 1,3-dipolaire en présence de 2-éthylhexyldiphényl phosphate par rapport au greffage du même composé sans agent de greffage (comparaison du n°3 avec le n°1), de 94 % pour le greffage du composé 1,3-dipolaire en présence de tri-(éthylhéxyl) phosphate (comparaison du n°2 avec le n°1) et de 133 % en présence de tri-isobutyl phosphate (comparaison du n°4 avec le n°1).

### 5.3 : Essai n°2

Cet essai a pour but de montrer l'avantage que procure le procédé de préparation d'un mélange maître selon l'invention, en fonction de différents taux d'additifs organophosphorés testés, par rapport à un procédé non conforme à l'invention de préparation d'un élastomère modifié par greffage d'un agent de greffage 1,3-dipolaire. Les taux testés d'additifs organophosphorés sont 0,5 pce, 1 pce, 2 pce, 5, pce 10 pce et 20 pce.

L'additif organophosphoré est le tri(éthylhéxyl) phosphate; l'agent de greffage est l'oxyde de 2-((2-oxiranylméthoxy)-1-napthtonitrile, le polymère est le polyisoprène de synthèse décrit ci-dessus.

Le procédé de préparation du polymère modifié non conforme (exemple 5) et le procédé de préparation du mélange maître selon l'invention (exemple 6, 7, 8 et 9) sont réalisés conformément à l'essai 1 mais avec une quantité différente d'additif organophosphoré allant de 0,075 g à 3g (soit de 0,5 pce à 20 pce). Les résultats sont reportés dans le tableau 2.

**[Table 2]**

| N° | Quantité d'additif organophosphoré introduit (en pce) | Quantité d'agent de greffage 1,3-dipolaire introduit (en % molaire) | Taux de greffage visé ₍en %molaire) | Taux de greffage obtenu (en % molaire) | Rendement de greffage (en %) | Taux de phosphore en ppm |
|---|---|---|---|---|---|---|
| 5 | 0 | 0,5 | 0,5 | 0,18 | 36 | <4 |
| 6 | 0,5 | 0,5 | 0,5 | 0,19 | 38 | 367 |
| 7 | 1 | 0,5 | 0,5 | 0,25 | 50 | 730 |
| 8 | 2 | 0,5 | 0,5 | 0,25 | 50 | 1455 |
| 9 | 5 | 0,5 | 0,5 | 0,30 | 60 | 3511 |
| 10 | 10 | 0,5 | 0,5 | 0,35 | 70 | 6700 |
| 11 | 20 | 0,5 | 0,5 | 0,37 | 74 | 12288 |

Au vu du tableau 4, on constate que l'augmentation du rendement de greffage du procédé de fabrication d'un mélange maître selon l'invention est dépendante de la quantité d'additif organophosphoré utilisée lors de ce procédé.

### 5.4 : Essai n°3 :

Cet essai a pour but de démontrer l'amélioration du rendement de greffage d'un procédé de fabrication d'un mélange maître selon l'invention par comparaison au procédé de modification d'un polymère non conforme à l'invention lorsque ce procédé de modification comprenant une étape de traitement thermique (procédé de l'art antérieur).

L'additif organophosphoré est le tri(éthylhéxyl) phosphate; l'agent de greffage est l'oxyde de 2-((2-oxiranylméthoxy)-1-napthtonitrile, le polymère est le polyisoprène de synthèse décrit précédemment.

Le procédé de préparation du polymère modifié est mis en oeuvre de la manière suivante (procédé non conforme, exemple 12) :
On introduit simultanément, sur un outil à cylindre à 23°C, 15 g du polyisoprène de synthèse (IR) et 0,26 g d'agent de greffage 1,3-dipolaire (soit 0,5 mole d'agent de greffage pour 100 moles d'unités de répétition constitutives du polyisoprène de synthèse). Le mélange est homogénéisé en 15 passes portefeuilles à température ambiante à 23°C. Puis, un traitement thermique à 120°C pendant 10 min sous presse à 10 bars de pression est effectué. On récupère ensuite le polymère modifié pour déterminer par analyses RMN ¹H les rendements de greffage. Les résultats sont reportés dans le tableau 3.

Le procédé de préparation du mélange maître selon l'invention est mis en oeuvre de la manière suivant (exemples 13 à 18) :
On introduit simultanément, sur un outil à cylindre à 23°C, l'additif organophosphoré au taux indiqué dans le tableau 3, 15 g du polyisoprène de synthèse (IR) et 0,26 g d'agent de greffage 1,3-dipolaire (soit 0,5 mole d'agent de greffage pour 100 moles d'unités de répétition constitutives du polyisoprène de synthèse). Le mélange est homogénéisé en 15 passes portefeuilles à température ambiante à 23°C. Puis, un traitement thermique à 120°C pendant 10 min sous presse à 10 bars de pression est effectué. On récupère ensuite le mélange maître pour déterminer par analyse RMN ¹H les rendements de greffage. Les résultats sont reportés dans le tableau 3.

**[Table 3]**

| N° | Quantité d'additif organopho sphoré introduit (en pce) | Quantité d'agent de greffage 1,3-dipolaire introduit (en % molaire) | Taux de greffage visé (en % molaire) | Taux de greffage obtenu (en % molaire) en l'absence de traitement thermique | Rendement de greffage (en %) en l'absence de traitement thermique | Taux de greffage obtenu (en % molaire) avec un traitement thermique | Rendement de greffage (en %) avec un traitement thermique | Taux de phosphore (en ppm) |
|---|---|---|---|---|---|---|---|---|
| 12 | 0 | 0,5 | 0,5 | 0,18 | 36 | 0,31 | 62 | <4 |
| 13 | 0,5 | 0,5 | 0,5 | 0,19 | 38 | 0,34 | 68 | 367 |
| 14 | 1 | 0,5 | 0,5 | 0,25 | 50 | 0,39 | 78 | 730 |
| 15 | 2 | 0,5 | 0,5 | 0,25 | 50 | 0,4 | 80 | 1445 |
| 16 | 5 | 0,5 | 0,5 | 0,30 | 60 | 0,39 | 78 | 3511 |
| 17 | 10 | 0,5 | 0,5 | 0,35 | 70 | 0,38 | 76 | 6700 |
| 18 | 20 | 0,5 | 0,5 | 0,37 | 74 | 0,4 | 80 | 12288 |

D'après le tableau 3, on constate qu'en l'absence d'agent de greffage, l'étape de traitement thermique permet d'augmenter le rendement de greffage de l'agent de greffage 1,3-dipolaire de 72 % (voir n°12 où le rendement de greffage est de 62 % avec l'étape de traitement thermique contre 36 % en l'absence de l'étape de traitement thermique).

Le même niveau d'augmentation du rendement de greffage (c'est-à-dire un rendement d'environ 62 %) est obtenu sans traitement thermique lorsqu'on utilise au moins 5 pce de d'additif organophosphoré (voir n°16).

L'ajout d'une étape de traitement thermique au procédé de fabrication d'une mélange maître selon l'invention permet d'augmenter d'avantage encore le rendement de greffage de l'agent de greffage 1,3-dipolaire déjà significativement élevé compte tenu de la présence de l'additif organophosphoré.

On reproduit les mêmes essais que précédemment avec un taux d'agent de greffage 1,3-dipolaire introduit de 0,5 % molaire mais avec différents additifs organophosphorés utilisés. Les résultats sont reportés dans le tableau 4.

**[Table 4]**

| N° | Additif organoph osphoré | Taux d'additif organophos phoré (en pce) | Quantité de composé 1,3-dipolaire introduit (en % molaire) | Taux de greffage visé (en % molaire) | Taux de greffage obtenu (en % molaire) sans traitement thermique | Rendement de greffage (en %) sans traitement thermique | Taux de greffage obtenu (en % molaire) avec un traitement thermique | Rendement de greffage (en %) avec traitement thermique |
|---|---|---|---|---|---|---|---|---|
| 19 | (-) | 0 | 0,5 | 0,5 | 0,18 | 36 | 0,31 | 62 |
| 20 | Additif A | 10 | 0,5 | 0,5 | 0,35 | 70 | 0,38 | 76 |
| 21 | Additif B | 10 | 0,5 | 0,5 | 0,28 | 56 | 0,33 | 66 |
| 22 | Additif C | 10 | 0,5 | 0,5 | 0,42 | 84 | 0,45 | 90 |

| | | | | | | | | |
|---|---|---|---|---|---|---|---|---|
| Additif A : tri-(éthylhéxyl) phosphate Additif B : 2-éthylhexyldiphényl phosphate Additif C : tri-isobutyl phosphate | | | | | | | | |

Le tableau 4 montre que, quel que soit l'additif organophosphoré utilisé dans le procédé de fabrication d'un mélange maître selon l'invention, on observe une amélioration significative du rendement de greffage, déjà élevé par la présence de l'additif organophosphoré, lorsqu'on effectue une étape additionnelle de traitement thermique.

### 5.5 : Essai n°4

Cet essai a pour but de démontrer l'amélioration du rendement d'un procédé de fabrication d'un mélange maître selon l'invention, quelle que soit la quantité d'agent de greffage 1,3-dipolaire introduite, par rapport à un procédé non conforme à l'invention et comprenant une étape de traitement thermique (procédé de l'art antérieur). Pour cela, différents taux de greffage (0,5 %, 1 % et 2 % molaire) sont visés avec un taux constant d'additif organophosphoré (10 pce).

L'additif organophosphoré est le tri(éthylhéxyl) phosphate; l'agent de greffage est l'oxyde de 2-((2-oxiranylméthoxy)-1-napthtonitrile, le polymère est le polyisoprène de synthèse décrit précédemment.

On procède comme pour l'essai n°3. On récupère ensuite soit le polymère modifié soit le mélange maître pour déterminer par analyses RMN ¹H les rendements de greffage. Les résultats sont reportés dans le tableau 5.

**[Table 5]**

| N° | Quantité d'additif organophosphoré introduit (en pce) | Quantité d'agent de greffage 1,3-dipolaire introduit (en % molaire) | Taux de greffage visé (en % molaire) | Taux de greffage obtenu (en % molaire) après un traitement thermique | Rendement de greffage (en %) après un traitement thermique |
|---|---|---|---|---|---|
| 23 | 0 | 0,5 | 0,5 | 0,31 | 62 |
| 24 | 10 | 0,5 | 0,5 | 0,38 | 76 |
| 25 | 0 | 1 | 1 | 0,43 | 43 |
| 26 | 10 | 1 | 1 | 0,71 | 71 |
| 27 | 0 | 2 | 2 | 0,92 | 46 |
| 28 | 10 | 2 | 2 | 1,4 | 70 |

Au vu du tableau 5, quel que soit le taux de greffage visé (0,5 % ; 1 % ou 2 %) de l'agent de greffage 1,3-dipolaire sur le polymère, on constate une augmentation du rendement de greffage lorsque la réaction de greffage s'effectue en présence de l'additif organophosphoré, conformément au procédé de l'invention.

### 5.6 : Essai n°5

Cet essai a pour but de démontrer l'amélioration du rendement d'un procédé de fabrication d'un mélange maître selon l'invention quelle que soit la nature du polymère utilisé.

Pour cela, les différents polymères testés sont :
- un polyisoprène de synthèse (IR) ayant Mn = 375000 g/mol et un Ip = 3,6 à titre de polymère
- un copolymère de styrène butadiène (SBR) contenant 26,5 % en poids de styrène par rapport au poids total du copolymère et 24 % en poids d'unités butadiène-1,2 par rapport au poids de la partie butadiènique, 28 % en poids d'unités butadiène-1,4 cis par rapport au poids de la partie butadiènique et 48 % en poids d'unité butadiène-1, 4 trans par rapport au poids de la partie butadiènique ; Mn = 120 000 g/mol et Ip = 1,22 ;
- le caoutchouc naturel (NR).

Dans cet essai, on utilise à titre d'additif organophosphoré le tri(éthylhéxyl) phosphate et à titre d'agent de greffage 1,3-dispolaire l'oxyde de 2-((2-oxiranylméthoxy)-1-napthtonitrile tel que précédemment décrit.

On procède comme dans l'essai n°1. L'ensemble du procédé se déroule à température ambiante à 23°C, aucune étape de traitement thermique n'est effectuée.

On récupère ensuite le polymère modifié ou le mélange maître pour déterminer par analyses RMN ¹H les rendements de greffage. Les résultats sont reportés dans le tableau 6.

**[Tableau 6]**

| N° | Polymère | Quantité d'additif organophosphoré introduit (en pce) | Quantité d'agent de greffage 1,3-dipolaire introduit (en % molaire) | Taux de greffage visé (en % molaire) | Taux de greffage obtenu (en % molaire) | Rendement de greffage (en %) |
|---|---|---|---|---|---|---|
| 29 | IR | 0 | 0,5 | 0,5 | 0,18 | 36 |
| 30 | IR | 10 | 0,5 | 0,5 | 0,35 | 70 |
| 31 | SBR | 0 | 0,5 | 0,5 | 0,37 | 74 |
| 32 | SBR | 10 | 0,5 | 0,5 | 0,47 | 94 |
| 33 | NR | 0 | 0,5 | 0,5 | 0,19 | 38 |
| 34 | NR | 10 | 0,5 | 0,5 | 0,32 | 64 |

Au vu du tableau 6, on constate que quelle que soit la nature du polymère utilisé, on obtient toujours une augmentation significative du rendement de greffage de l'agent de greffage 1,3-dipolaire en présence de l'additif organophosphoré. Cette augmentation de greffage est plus élevée pour le caoutchouc naturel et le polyisoprène de synthèse (augmentation de 68 % et 94 % respectivement) que pour le copolymère de styrène-butadiène (29 %).

## Revendications

1. Procédé de fabrication d'un mélange maître comprenant les étapes suivantes :
(a) mettre en contact au moins un polymère initial comportant au moins une insaturation carbone-carbone avec au moins un agent de greffage 1,3-dipolaire porteur d'au moins un dipôle oxyde de nitrile en présence d'un au moins un additif organophosphoré choisi dans le groupe constitué par les triesters d'acide phosphorique, les phosphonates, les phosphinates, les oxydes de phosphines et les mélanges de ces composés,
(b) récupérer le mélange maître obtenu à l'étape précédente.

2. Procédé de fabrication d'un mélange maître selon la revendication 1, dans lequel les étapes (a) et (b) s'effectuent à une température inférieure ou égale à 35°C.

3. Procédé de fabrication d'un mélange maître selon l'une quelconque des revendications précédentes, dans lequel le procédé comprend en outre au moins une étape de traitement thermique (a'), postérieure à l'étape (a).

4. Procédé de préparation de fabrication d'un mélange maître selon l'une quelconque des revendications précédentes, dans lequel l'additif organophosphoré répond à la formule (1) : 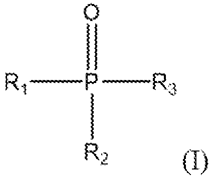 dans laquelle :
- R1 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20;
- R2 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20; et
- R3 est choisi dans le groupe constitué par les alkyles en C1-C20, les aryles en C6-C20, les alkyl(C1-C20)aryles en C6-C20, les aryl(C6-C20)alkyles en C1-C20 et les groupes O-Ra avec Ra un radical choisi dans le groupe constitué par les alkyles en C1-C20, les aryles en C6-C20, les alkyl(C1-C20)aryles en C6-C20 et les aryl(C6-C20)alkyles en C1-C20.

5. Procédé de fabrication d'un mélange maître selon l'une quelconque des revendications précédentes, dans lequel l'additif organophosphoré répond à la formule (Ia) : 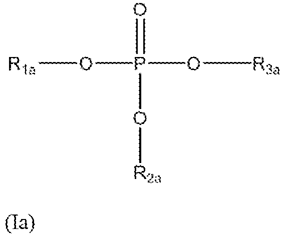 dans laquelle R1a, R2a, R3a, identiques ou différents, sont choisis dans le groupe constitué par les alkyles en C1-C20, les aryles en C6-C20, les alkyl(C1-C20)aryles en C6-C20 et les aryl(C6-C20)alkyles en C1-C20.

6. Procédé de fabrication d'un mélange maître selon la revendication 5, dans lequel R1a, R2a, R3a, identiques ou différents, sont choisis dans le groupe constitué par les alkyles en C1-C12, les aryles en C6-C12, les alkyl(C1-C12)aryles en C6-C12 et les aryl(C6-C12)alkyles en C1-C12.

7. Procédé de préparation de fabrication d'un mélange maître selon la revendication 5, dans lequel R1a, R2a, R3a, identiques ou différents, sont choisis dans le groupe constitué par les alkyles en C1-C12 et les aryles en C6-C12.

8. Procédé de fabrication d'un mélange maître selon l'une quelconque des revendications précédentes, dans lequel l'additif organophosphoré est choisi dans le groupe constitué par le tri(éthylhéxyl)phosphate, le 2-éthylhexyldiphénylphosphate, le tri-n-octylphosphate, le triisobutylphosphate et leurs mélanges.

9. Procédé de fabrication d'un mélange maître selon l'une quelconque des revendications précédentes, dans lequel le polymère initial est un élastomère comportant au moins une insaturation carbone-carbone.

10. Procédé de fabrication d'un mélange maître selon l'une quelconque des revendications précédentes, dans lequel le polymère initial est un élastomère diénique.

11. Procédé de fabrication d'un mélange maître selon l'une quelconque des revendications précédentes, dans lequel l'agent de greffage 1,3-dipolaire comprend outre le dipôle oxyde de nitrile, au moins une fonction chimique choisie dans le groupe constitué par les hétérocycles azotés ou soufré éventuellement substitués, les esters, les oxiranes, les carbonates et les amines tertiaires.

12. Mélange maître à base d'au moins un additif organophosphoré, d'au moins un polymère initial comportant au moins une insaturation carbone-carbone et d'au moins un agent de greffage 1,3-dipolaire porteur d'au moins un dipôle oxyde de nitrile, ledit additif organophosphoré étant choisi dans le groupe constitué par les triesters d'acide phosphorique, les phosphonates, les phosphinates, les oxydes de phosphines et les mélanges de ces composés.

13. Composition comprenant au moins un mélange maître selon la revendication 12 ou obtenu selon le procédé défini à l'une quelconque des revendications 1 à 11.

14. Article comprenant au moins une composition selon la revendication 13.

15. Bandage pneumatique ou non pneumatique comprenant au moins une composition définie à la revendication 13.

## Patentansprüche

1. Verfahren zur Herstellung eines Masterbatches, das folgende Schritte umfasst:
(a) In-Kontakt-Bringen von mindestens einem Ausgangspolymer, das mindestens eine ungesättigte Bindung Kohlenstoff-Kohlenstoff aufweist, mit mindestens einem Mittel zur Pfropfung unter Verwendung einer 1,3-dipolaren Verbindung, das mindestens ein Nitriloxid als Dipol trägt, in Gegenwart von einem mindestens einem phosphororganischen Zusatzstoff, der aus der Gruppe ausgewählt ist, die aus Phosphorsäuretriestern, Phosphonaten, Phosphinaten, Phosphinoxiden und Mischungen aus diesen Verbindungen besteht,
(b) Gewinnen des Masterbatches, das im vorherigen Schritt erhalten wurde.

2. Verfahren zur Herstellung eines Masterbatches nach Anspruch 1, wobei die Schritte (a) und (b) bei einer Temperatur kleiner gleich 35°C durchgeführt werden.

3. Verfahren zur Herstellung eines Masterbatches nach einem der vorhergehenden Ansprüche, wobei das Verfahren ferner mindestens einen Schritt zur Wärmebehandlung (a') nach Schritt (a) umfasst.

4. Verfahren zur Herstellung eines Masterbatches nach einem der vorhergehenden Ansprüche, wobei der phosphororganische Zusatzstoff Formel (I) entspricht: 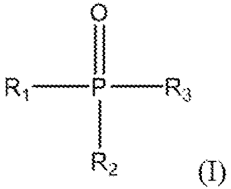 in der:
- R1 aus der Gruppe ausgewählt ist, die aus C1-C20-Alkylen, C6-C20-Arylen, C6-C20-Alkyl(C1-C20)-Arylen, C1-C20-Aryl(C6-C20)-Alkylen und Gruppen O-Ra besteht, wobei Ra ein Rest ist, der aus der Gruppe ausgewählt ist, die aus C1-C20-Alkylen, C6-C20-Arylen, C6-C20-Alkyl(C1-C20)-Arylen und C1-C20-Aryl(C6-C20)-Alkylen besteht;
- R2 aus der Gruppe ausgewählt ist, die aus C1-C20-Alkylen, C6-C20-Arylen, C6-C20-Alkyl(C1-C20)-Arylen, C1-C20-Aryl(C6-C20)-Alkylen und Gruppen O-Ra besteht, wobei Ra ein Rest ist, der aus der Gruppe ausgewählt ist, die aus C1-C20-Alkylen, C6-C20-Arylen, C6-C20-Alkyl(C1-C20)-Arylen und C1-C20-Aryl(C6-C20)-Alkylen besteht; und
- R3 aus der Gruppe ausgewählt ist, die aus C1-C20-Alkylen, C6-C20-Arylen, C6-C20-Alkyl(C1-C20)-Arylen, C1-C20-Aryl(C6-C20)-Alkylen und Gruppen O-Ra besteht, wobei Ra ein Rest ist, der aus der Gruppe ausgewählt ist, die aus C1-C20-Alkylen, C6-C20-Arylen, C6-C20-Alkyl(C1-C20)-Arylen und C1-C20-Aryl(C6-C20)-Alkylen besteht.

5. Verfahren zur Herstellung eines Masterbatches nach einem der vorhergehenden Ansprüche, wobei der phosphororganische Zusatzstoff Formel (Ia) entspricht: 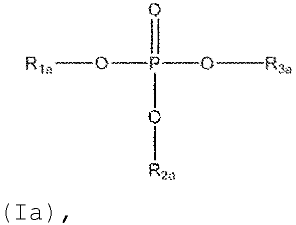 in der R1a, R2a, R3a, gleich oder unterschiedlich, aus der Gruppe ausgewählt sind, die aus C1-C20-Alkylen, C6-C20-Arylen, C6-C20-Alkyl(C1-C20)-Arylen und C1-C20-Aryl(C6-C20)-Alkylen besteht.

6. Verfahren zur Herstellung eines Masterbatches nach Anspruch 5, wobei R1a, R2a, R3a, gleich oder unterschiedlich, aus der Gruppe ausgewählt sind, die aus C1-C12-Alkylen, C6-C12-Arylen, C6-C12-Alkyl(C1-C12)-Arylen und C1-C12-Aryl(C6-C12)-Alkylen besteht.

7. Verfahren zur Herstellung eines Masterbatches nach Anspruch 5, wobei R1a, R2a, R3a, gleich oder unterschiedlich, aus der Gruppe ausgewählt sind, die aus C1-C12-Alkylen und C6-C12-Arylen besteht.

8. Verfahren zur Herstellung eines Masterbatches nach einem der vorhergehenden Ansprüche, wobei der phosphororganische Zusatzstoff aus der Gruppe ausgewählt ist, die aus Tri(ethylhexyl)phosphat, 2-Ethylhexyldiphenylphosphat, Tri-n-octylphosphat, Triisobutylphosphat und ihren Mischungen besteht.

9. Verfahren zur Herstellung eines Masterbatches nach einem der vorhergehenden Ansprüche, wobei das Ausgangspolymer ein Elastomer ist, das mindestens eine ungesättigte Bindung Kohlenstoff-Kohlenstoff aufweist.

10. Verfahren zur Herstellung eines Masterbatches nach einem der vorhergehenden Ansprüche, wobei das Ausgangspolymer ein Dien-Elastomer ist.

11. Verfahren zur Herstellung eines Masterbatches nach einem der vorhergehenden Ansprüche, wobei das Mittel zur Pfropfung unter Verwendung einer 1,3-dipolaren Verbindung abgesehen von dem Nitriloxid als Dipol mindestens eine chemische Gruppe umfasst, die aus der Gruppe ausgewählt ist, die aus gegebenenfalls substituierten stickstoffhaltigen oder schwefelhaltigen Heterocyclen, Estern, Oxiranen, Carbonaten und tertiären Aminen besteht.

12. Masterbatch auf Basis von mindestens einem phosphororganischen Zusatzstoff, mindestens einem Ausgangspolymer, das mindestens eine ungesättigte Bindung Kohlenstoff-Kohlenstoff aufweist, und mindestens einem Mittel zur Pfropfung unter Verwendung einer 1,3-dipolaren Verbindung, das mindestens ein Nitriloxid als Dipol trägt, wobei der phosphororganische Zusatzstoff aus der Gruppe ausgewählt ist, die aus Phosphorsäuretriestern, Phosphonaten, Phosphinaten, Phosphinoxiden und Mischungen aus diesen Verbindungen besteht.

13. Zusammensetzung, die mindestens ein Masterbatch nach Anspruch 12 oder das gemäß dem Verfahren nach einem der Ansprüche 1 bis 11 erhalten wird, umfasst.

14. Gegenstand, der mindestens eine Zusammensetzung nach Anspruch 13 umfasst.

15. Luftreifen oder luftloser Reifen, der mindestens eine Zusammensetzung nach Anspruch 13 umfasst.

## Claims

1. Process for manufacturing a masterbatch, comprising the following steps:
(a) bringing at least one initial polymer comprising at least one carbon-carbon unsaturation into contact with at least one 1,3-dipolar grafting agent bearing at least one nitrile oxide dipole in the presence of at least one organophosphorus additive selected from the group consisting of phosphoric acid triesters, phosphonates, phosphinates, phosphine oxides and the mixtures of these compounds,
(b) recovering the masterbatch obtained in the preceding step.

2. Process for manufacturing a masterbatch according to Claim 1, in which steps (a) and (b) are carried out at a temperature below or equal to 35°C.

3. Process for manufacturing a masterbatch according to either one of the preceding claims, in which the process further comprises a heat treatment step (a'), after step (a).

4. Process for preparing for manufacturing a masterbatch according to any one of the preceding claims, in which the organophosphorous additive corresponds to the formula (I): 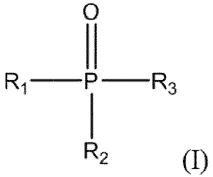 in which:
- R1 is selected from the group consisting of C1-C20 alkyls, C6-C20 aryls, (C1-C20)alkyl(C6-C20)aryls, (C6-C20)aryl(C1-C20)alkyls and O-Ra groups with Ra being a radical selected from the group consisting of C1-C20 alkyls, C6-C20 aryls, (C1-C20)alkyl(C6-C20)aryls and (C6-C20)aryl(C1-C20)alkyls;
- R2 is selected from the group consisting of C1-C20 alkyls, C6-C20 aryls, (C1-C20)alkyl(C6-C20)aryls, (C6-C20)aryl(C1-C20)alkyls and O-Ra groups with Ra being a radical selected from the group consisting of C1-C20 alkyls, C6-C20 aryls, (C1-C20)alkyl(C6-C20)aryls and (C6-C20)aryl(C1-C20)alkyls; and
- R3 is selected from the group consisting of C1-C20 alkyls, C6-C20 aryls, (C1-C20)alkyl(C6-C20)aryls, (C6-C20)aryl(C1-C20)alkyls and O-Ra groups with Ra being a radical selected from the group consisting of C1-C20 alkyls, C6-C20 aryls, (C1-C20)alkyl(C6-C20)aryls and (C6-C20)aryl(C1-C20)alkyls.

5. Process for manufacturing a masterbatch according to any one of the preceding claims, in which the organophosphorous additive corresponds to the formula (Ia): 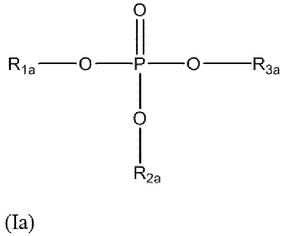 in which R1a, R2a, R3a, which may be identical or different, are selected from the group consisting of C1-C20 alkyls, C6-C20 aryls, (C1-C20)alkyl(C6-C20)aryls and (C6-C20)aryl(C1-C20)alkyls.

6. Process for manufacturing a masterbatch according to Claim 5, in which R1a, R2a, R3a, which may be identical or different, are selected from the group consisting of C1-C12 alkyls, C6-C12 aryls, (C1-C12)alkyl(C6-C12)aryls and (C6-C12)aryl(C1-C12)alkyls.

7. Process for preparing for manufacturing a masterbatch according to Claim 5, in which R1a, R2a, R3a, which may be identical or different, are selected from the group consisting of C1-C12 alkyls and C6-C12 aryls.

8. Process for manufacturing a masterbatch according to any one of the preceding claims, in which the organophosphorous additive is selected from the group consisting of tris(ethylhexyl) phosphate, 2-ethylhexyl diphenyl phosphate, tri-n-octyl phosphate, triisobutyl phosphate and mixtures thereof.

9. Process for manufacturing a masterbatch according to any one of the preceding claims, in which the initial polymer is an elastomer comprising at least one carbon-carbon unsaturation.

10. Process for manufacturing a masterbatch according to any one of the preceding claims, in which the initial polymer is a diene elastomer.

11. Process for manufacturing a masterbatch according to any one of the preceding claims, in which the 1,3-dipolar grafting agent comprises, in addition to the nitrile oxide dipole, at least one chemical function selected from the group consisting of optionally substituted nitrogen-containing or sulfur-containing heterocycles, esters, oxiranes, carbonates and tertiary amines.

12. Masterbatch based on at least one organophosphorus additive, on at least one initial polymer comprising at least one carbon-carbon unsaturation and at least one 1,3-dipolar grafting agent bearing at least one nitrile oxide dipole, said organophosphorus additive being selected from the group consisting of phosphoric acid triesters, phosphonates, phosphinates, phosphine oxides and the mixtures of these compounds.

13. Composition comprising at least one masterbatch according to Claim 12 or obtained according to the process defined in any one of Claims 1 to 11.

14. Article comprising at least one composition according to Claim 13.

15. Pneumatic or non-pneumatic tyre comprising at least one composition defined according to Claim 13.
